# FASCICULE DE BREVET EUROPEEN

(11) **EP 1 682 836 B1**
(45) Date de publication et mention de la délivrance du brevet: **01.05.2013**
(21) Numéro de dépôt: 04817099.7
(22) Date de dépôt: 21.09.2004
(51) Int. Cl.: F25J 3/02, C01B 31/18, C01B 3/50

(54) **PROCEDE ET INSTALLATION DE PRODUCTION DE MONOXYDE DE CARBONE PAR DISTILLATION CRYOGENIQUE**
VERFAHREN UND ANLAGE ZUR HERSTELLUNG VON KOHLENMONOXID DURCH KRYOGENE DESTILLATION
METHOD AND INSTALLATION FOR PRODUCING CARBON MONOXIDE BY CRYOGENIC DISTILLATION

(30) Priorité: 30.09.2003 FR 0350621
(43) Date de publication de la demande: 26.07.2006
(73) Titulaire: L'AIR LIQUIDE, Société Anonyme pour l'Etude et l'Exploitation des Procédés Georges Claude, 75007 Paris (FR)
(72) Inventeur: FAUROUX, Danièle, 94450 Limeil-Brevannes (FR)
(74) Mandataire: Mercey, Fiona Susan
(86) Numéro de dépôt international: PCT/FR2004/050446
(87) Numéro de publication internationale: WO 2005/033599

(56) Documents cités:
- EP-A- 0 928 936
- EP-A- 0 933 330
- DE-A- 19 541 339
- US-A- 4 478 621
- US-A- 5 609 040

## Description

La présente invention est relative à un procédé et à une installation de production de monoxyde de carbone par distillation cryogénique selon le préambule de la revendication 1 respectivement 5. Un tel procédé et une telle installation sont connus de EP-A-933 330.

Le gaz de synthèse produit par oxydation partielle ou par réformage contient souvent un pourcentage d'azote.

Tous les pourcentages mentionnés sont des pourcentages molaires.

Il est connu de réduire le pourcentage d'azote dans le monoxyde de carbone produit en utilisant une colonne de séparation d'azote et de monoxyde de carbone (EP-A-928936).

Un but de la présente invention est de pouvoir une installation de séparation cryogénique pour la production de monoxyde de carbone ne contenant substantiellement pas d'azote en utilisant moins de colonnes que les installations de l'art antérieur.

Selon un objet de la présente invention, il est prévu un procédé de production de monoxyde de carbone par distillation cryogénique selon la revendication 1.

Optionnellement :
- le débit riche en monoxyde de carbone soutiré de la colonne de distillation est un débit liquide ;
- un cycle de monoxyde de carbone refroidit la tête de la colonne de distillation et/ou réchauffe la cuve de la colonne de distillation et/ou réchauffe la cuve de la colonne d'épuisement ;
- du monoxyde de carbone de cycle est détendu dans une turbine.

Selon un autre objet de l'invention, il est prévu une installation de production de monoxyde de carbone par distillation cryogénique selon la revendication 5.

Eventuellement :
- la colonne de distillation a un condenseur de tête et/ou un rebouilleur de cuve ;
- la colonne d'épuisement a un rebouilleur de cuve ;
- la ou les colonne(s) est (sont) réchauffée(s) et/ou refroidie(s) au moyen d'un cycle de monoxyde de carbone gazeux.

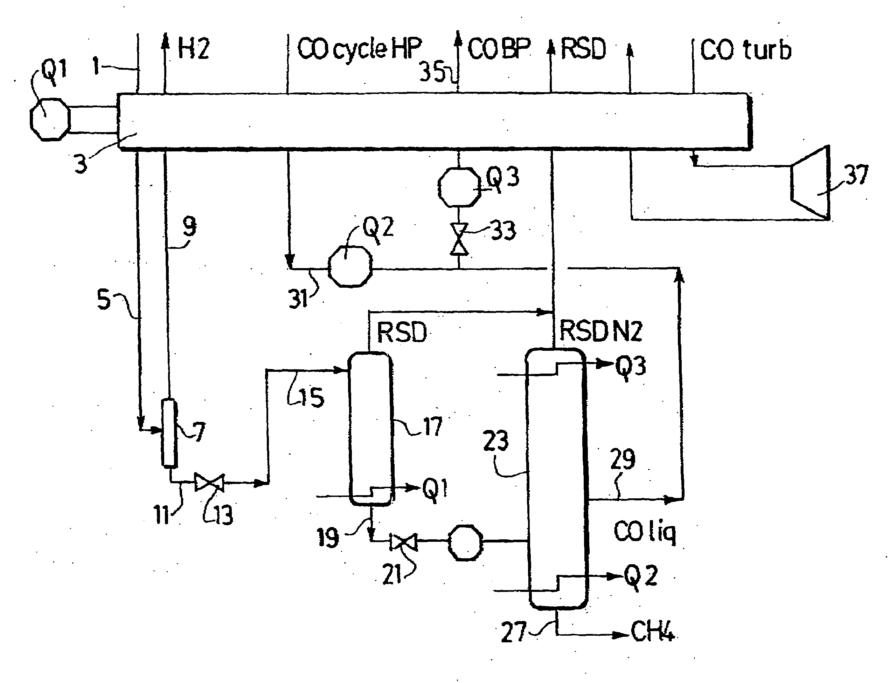

L'invention sera décrite en plus de détail en se référant à l'unique figure.

Dans la figure, un gaz de synthèse 1 contenant 40 % d'hydrogène, 58 % de monoxyde de carbone, 0,1 % de méthane, 0,5 % d'azote et 1,3 % d'argon.

Ce gaz se refroidit dans un échangeur 3 pour former un débit refroidi 5 qui est envoyé à un pot séparateur 7 où il se condense partiellement. Le gaz formé 9, riche en hydrogène, se réchauffe dans l'échangeur 3 et est envoyé à un consommateur.

Le liquide 11 est détendu dans une vanne 13 pour forme un débit 15. Le débit liquide 15 est envoyé en tête d'une colonne d'épuisement 17 chauffée en cuve par un débit Q1 envoyé au rebouilleur de cuve, qui peut par exemple faire partie d'un cycle de monoxyde de carbone. Un débit gazeux résiduaire RSD enrichi en hydrogène est sorti de la tête de la colonne d'épuisement 17. Un débit liquide 19 dépourvu en hydrogène est soutiré en cuve de la colonne 17, détendu dans la vanne 21 et envoyé à un point intermédiaire d'une colonne de distillation 23. La colonne 23 est chauffée en cuve par un débit Q2 envoyé au rebouilleur de cuve et refroidie en tête par un débit Q3 envoyé au condenseur de tête, les deux débits pouvant faire partie d'un cycle de monoxyde de carbone.

Un débit liquide 27 riche en méthane est soutiré en cuve de la colonne 23. Un débit liquide riche en monoxyde de carbone 29 est soutiré à un point intermédiaire supérieur au point d'arrivée du liquide 19. Ce liquide contient de préférence 98,5 % de monoxyde de carbone, moins d'1 % d'argon, moins de 10⁻² ppm de méthane et 0,4 % d'azote. Un mélange gazeux d'hydrogène et d'azote RSD N2 est soutiré en tête de la colonne de distillation 3.

Le débit RSD N2 est mélangé avec le débit RSD provenant de la colonne 17 et sort de l'installation pour être rejeté à l'atmosphère et/ou brûlé après être réchauffé dans l'échangeur 3.

Le liquide 29 rejoint un débit de liquide 31 provenant du cycle et le débit mélangé est détendu dans une vanne 33 avant de se réchauffer dans l'échangeur 3 pour former le produit 35.

L'installation est tenue en froid par une turbine de monoxyde de carbone gazeuse 37, détente d'un autre fluide et/ou par biberonnage.

## Revendications

1. Procédé de production de monoxyde de carbone par distillation cryogénique comprenant les étapes de :
i) refroidir et condenser partiellement un mélange gazeux (1) contenant du monoxyde de carbone, de l'hydrogène du méthane et de l'azote pour produire un mélange gazeux refroidi et partiellement condensé
ii) séparer le mélange gazeux refroidi et partiellement condensé (5) pour produire un gaz enrichi en hydrogène et un liquide enrichi en monoxyde de carbone
iii) envoyer un débit du liquide enrichi en monoxyde de carbone à une colonne d'épuisement (17) pour produire du monoxyde de carbone liquide dépourvu en hydrogène et du monoxyde de carbone gazeux enrichi en hydrogène
iv) envoyer un débit (19) du monoxyde de carbone dépourvu en hydrogène à un premier niveau intermédiaire d'une colonne de distillation (23)
v) soutirer en cuve de la colonne de distillation un débit liquide enrichi en méthane (27) par rapport au débit alimentant la colonne de distillation
vi) soutirer en tête de la colonne de distillation un débit enrichi en azote et éventuellement en hydrogène par rapport au débit alimentant la colonne de distillation, **caracterisé en ce qu'**en un deuxième point intermédiaire de la colonne de distillation un débit (29) riche en monoxyde de carbone est soutiré, le deuxième point intermédiaire étant au-dessus du premier point intermédiaire.

2. Procédé selon la revendication 1 dans lequel le débit (29) riche en monoxyde de carbone soutiré de la colonne de distillation est un débit liquide.

3. Procédé selon la revendication 1 ou 2 dans lequel un cycle (Q1, Q2, Q3) de monoxyde de carbone refroidit la tête de la colonne de distillation (23) et/ou réchauffe la cuve de la colonne de distillation et/ou réchauffe la cuve de la colonne d'épuisement (17).

4. Procédé selon l'une des revendications précédentes dans lequel du monoxyde de carbone de cycle est détendu dans une turbine (37).

5. Installation de production de monoxyde de carbone par distillation cryogénique comprenant :
a) un échangeur de chaleur (3) pour refroidir et condenser partiellement un mélange gazeux (1) contenant du monoxyde de carbone, de l'hydrogène **caractérisé en ce que** l'installation comprend du méthane et de l'azote pour produire un mélange gazeux refroidi et partiellement condensé (5)
b) un séparateur (7) pour séparer le mélange gazeux refroidi et partiellement condensé pour produire un gaz enrichi en hydrogène et un liquide enrichi en monoxyde de carbone
c) des moyens pour emmener le mélange gazeux refroidi et partiellement condensé de l'échangeur de chaleur au séparateur
d) une colonne d'épuisement (17) et des moyens pour emmener au moins une partie du liquide enrichi en monoxyde de carbone à celle-ci
e) des moyens pour soutirer un gaz enrichi en hydrogène de la tête de la colonne d'épuisement et des moyens pour soutirer un liquide (19) dépourvu en hydrogène en cuve de la colonne d'épuisement
f) une colonne de distillation (23), des moyens pour envoyer un débit du liquide dépourvu en hydrogène à un premier point intermédiaire de la colonne de distillation, des moyens pour soutirer un liquide de cuve (27) de la colonne de distillation et des moyens pour soutirer un gaz de tête (RSD N2) de la colonne de distillation **caractérisé en ce que** l'installation comprend des moyens pour soutirer un fluide intermédiaire (29) à un deuxième point intermédiaire de la colonne de distillation, le deuxième point intermédiaire se trouvant au-dessus du premier point intermédiaire.

6. Installation selon la revendication 5 dans laquelle la colonne de distillation (23) a un condenseur de tête et/ou un rebouilleur de cuve.

7. Installation selon la revendication 5 ou 6 dans laquelle la colonne d'épuisement (17) a un rebouilleur de cuve.

8. Installation selon la revendication 6 ou 7 dans laquelle la ou les colonne(s) est (sont) réchauffée(s) et/ou refroidie(s) au moyen d'un cycle de monoxyde de carbone gazeux.

## Claims

1. Method for producing carbon monoxide by cryogenic distillation, comprising the following steps:
i) cooling and partially condensing a gas mixture (1) containing carbon monoxide, hydrogen, methane and nitrogen to produce a cooled and partially condensed gas mixture;
ii) separating the cooled and partially condensed gas mixture (5) to produce a hydrogen-enriched gas and a carbon monoxide-enriched liquid;
iii) sending a stream of the carbon monoxide-enriched liquid to a stripping column (17) to produce hydrogen-free liquid carbon monoxide and hydrogen-enriched carbon monoxide gas;
iv) sending a stream (19) of the hydrogen-free carbon monoxide to a first intermediate level of a distillation column (23);
v) withdrawing a liquid stream (27), enriched with methane compared with the stream feeding the distillation column, from the bottom of the distillation column;
vi) withdrawing a stream, enriched with nitrogen and optionally hydrogen compared with the stream feeding the distillation column, from the top of the distillation column,
**characterised in that** a carbon monoxide-rich stream (29) is withdrawn at a second intermediate point of the distillation column, the second intermediate point being above the first intermediate point.

2. Method according to claim 1, wherein the carbon monoxide-rich stream (29) withdrawn from the distillation column is a liquid stream.

3. Method according to either claim 1 or claim 2, wherein a carbon monoxide cycle (Q1, Q2, Q3) cools the top of the distillation column (23) and/or heats the bottom of the distillation column and/or heats the bottom of the stripping column (17).

4. Method according to any of the preceding claims, wherein cycle carbon monoxide is expanded in a turbine (37).

5. Installation for producing carbon monoxide by cryogenic distillation, comprising:
a) a heat exchanger (3) for cooling and partially condensing a gas mixture (1) containing carbon monoxide, hydrogen, methane and nitrogen to produce a cooled and partially condensed gas mixture (5);
b) a separator (7) for separating the cooled and partially condensed gas mixture to produce a hydrogen-enriched gas and a carbon monoxide-enriched liquid;
c) means for conveying the cooled and partially condensed gas mixture from the heat exchanger to the separator;
d) a stripping column (17) and means for conveying at least part of the carbon monoxide-enriched liquid thereto;
e) means for withdrawing a hydrogen-enriched gas from the top of the stripping column and means for withdrawing a hydrogen-free liquid (19) from the bottom of the stripping column; and
f) a distillation column (23), means for sending a stream of the hydrogen-free liquid to a first intermediate point of the distillation column, means for withdrawing a bottom liquid (27) from the distillation column and means for withdrawing an overhead gas (RSD N2) from the distillation column, **characterised in that** the installation comprises means for withdrawing an intermediate fluid (29) at a second intermediate point of the distillation column, the second intermediate point being above the first intermediate point.

6. Installation according to claim 5, wherein the distillation column (23) has a top condenser and/or a bottom reboiler.

7. Installation according to either claim 5 or claim 6, wherein the stripping column (17) has a bottom reboiler.

8. Installation according to either claim 6 or claim 7, wherein the column (columns) is (are) heated and/or cooled using a carbon monoxide gas cycle.

## Patentansprüche

1. Verfahren zur Herstellung von Kohlenstoffmonoxid durch kryogene Destillation, das die Schritte umfasst:
i) Abkühlen und teilweise Kondensieren eines gasförmigen Gemischs (1), welches Kohlenstoffmonoxid, Wasserstoff, Methan und Stickstoff enthält, zur Herstellung eines abgekühlten und teilweise kondensierten Gasgemischs
ii) Abtrennen des abgekühlten und teilweise kondensierten Gasgemischs (5) zur Herstellung eines mit Wasserstoff angereicherten Gases und einer mit Kohlenstoffmonoxid angereicherten Flüssigkeit
iii) Überführen eines mit Kohlenstoffmonoxid angereicherten flüssigen Durchsatzes in eine Abtreibersäule (17) zur Herstellung von flüssigem, wasserstofffreiem Kohlenstoffmonoxid sowie von gasförmigem, mit Wasserstoff angereichertem Kohlenstoffmonoxid
iv) Überführen eines Durchsatzes (19) von wasserstofffreiem Kohlenstoffmonoxid in eine erste Zwischenebene einer Destillationssäule (23)
v) Abziehen am Behälter der Destillationssäule eines flüssigen Durchsatzes (27), der im Vergleich zum Durchsatz, der die Destillationssäule beschickt, mit Methan angereichert ist
vi) Abziehen am Kopf der Destillationssäule eines Durchsatzes, der im Vergleich zum Durchsatz, welcher die Destillationskolonne beschickt, mit Stickstoff und gegebenenfalls mit Wasserstoff angereichert ist,
**dadurch gekennzeichnet, dass** an einer zweiten Zwischenstelle der Destillationssäule ein an Kohlenstoffmonoxid reicher Durchsatz (29) abgezogen wird, wobei die zweite Zwischenstelle oberhalb der ersten Zwischenstelle liegt.

2. Verfahren nach Anspruch 1, wobei der von der Destillationssäule abgezogene, an Kohlenstoffmonoxid reiche Durchsatz (29) ein flüssiger Durchsatz ist.

3. Verfahren nach einem der Ansprüche 1 und 2, wobei ein Zyklus (Q1, Q2, Q3) von Kohlenstoffmonoxid den Kopf der Destillationssäule (23) abkühlt und/oder den Behälter der Destillationssäule erwärmt und/oder den Behälter der Abtreibersäule (17) erwärmt.

4. Verfahren nach einem der vorherigen Ansprüche, wobei Kohlenstoffmonoxid aus dem Zyklus in eine Turbine (37) entlassen wird.

5. Anlage zur Herstellung von Kohlenstoffmonoxid durch kryogene Destillation umfassend:
a) einen Wärmetauscher (3) zum Abkühlen und teilweisen Kondensieren eines gasförmigen Gemischs (1), das Kohlenstoffmonoxid, Wasserstoff, Methan und Stickstoff enthält, zur Herstellung eines abgekühlten und teilweise kondensierten gasförmigen Gemischs (5)
b) eine Trennvorrichtung (7) zum Abtrennen des abgekühlten und teilweise kondensierten Gemischs zur Herstellung eines mit Wasserstoff angereicherten Gases und einer mit Kohlenstoffmonoxid angereicherten Flüssigkeit
c) Hilfsmittel zum Überführen des abgekühlten und teilweise kondensierten Gemischs aus dem Wärmetauscher in die Trennvorrichtung
d) eine Abtreibersäule (17) und Hilfsmittel zum Überführen wenigstens eines Teils der mit Kohlenstoffmonoxid angereicherten Flüssigkeit in diese
e) Hilfsmittel zum Abziehen eines mit Wasserstoff angereicherten Gases am Kopf der Abtreibersäule und Hilfsmittel zum Abziehen einer Wasserstoff-freien Flüssigkeit (19) am Behälter der Abtreibersäule
f) eine Destillationssäule (23), Hilfsmittel zum Überführen eines wasserstofffreien Durchsatzes an eine erste Zwischenstelle der Destillationssäule, Hilfsmittel zum Abziehen einer Flüssigkeit aus dem Behälter (27) der Destillationssäule sowie Hilfsmittel zum Abziehen eines Gases aus dem Kopf (RSD N2) der Destillationssäule,
**dadurch gekennzeichnet, dass** die Anlage Hilfsmittel zum Abziehen einer Zwischenflüssigkeit (29) an einer zweiten Zwischenstelle der Destillationssäule umfasst, wobei sich die zweite Zwischenstelle oberhalb der ersten Zwischenstelle befindet.

6. Anlage nach Anspruch 5, wobei die Destillationssäule (23) einen Kopfkondensator und/oder einen Verdampferbehälter aufweist.

7. Anlage nach Anspruch 5 oder 6, wobei die Abtreibersäule (17) einen Verdampferbehälter aufweist.

8. Anlage nach einem der Ansprüche 6 oder 7, wobei die Säule(n) mittels eines Zyklus von gasförmigem Kohlenstoffmonoxid erwärmt und/oder abgekühlt wird/werden.
